Europäisches Patentamt

European Patent Office

Office européen des brevets

(19)

(11) Veröffentlichungsnummer: **0 004 955**
**B1**

(12) **EUROPÄISCHE PATENTSCHRIFT**

(45) Veröffentlichungstag der Patentschrift: **13.01.82**

(21) Anmeldenummer: **79101145.5**

(22) Anmeldetag: **14.04.79**

(51) Int. Cl.³: **A 62 C 3/02, B 64 D 1/16**

(54) Brandlöschverfahren und Vorrichtung zur Durchführung des Verfahrens.

(30) Priorität: **19.04.78 CH 4191/78**

(43) Veröffentlichungstag der Anmeldung:
**31.10.79 Patentblatt 79/22**

(45) Bekanntmachung des Hinweises auf die Patenterteilung:
**13.01.82 Patentblatt 82/2**

(84) Benannte Vertragsstaaten:
**DE FR IT SE**

(56) Entgegenhaltungen:
**CH - A - 465 416**
**DE - A - 2 754 711**
**US - A - 3 248 074**
**US - A - 3 661 211**

(73) Patentinhaber: **AIR-ZERMATT AG**
**Postfach**
**CH-3920 Zermatt (CH)**

(72) Erfinder: **Perren, Beat H.**
**Bahnhofstrasse**
**CH-3920 Zermatt (CH)**

(74) Vertreter: **Keller, Hartmut et al,**
**Hartmut Keller Dr. René Keller Postfach 12**
**CH-3000 Bern 7 (CH)**

### Brandlöschverfahren und Vorrichtung zur Durchführung des Verfahrens

Die Erfindung bezieht sich auf ein Verfahren zum Löschen von Bränden, bei dem ein an einem Luftfahrzeug hängender, oben offener, mit Löschflüssigkeit, insbesondere Löchwasser, gefüllter Behälter in bezug auf das Luftfahrzeug nach vorn gedreht und dadurch entleert wird, und eine Vorrichtung zur Ausführung des Verfahrens, bei welcher dieser Behälter in seiner Ruhelage gegen eine Drehung um die horizontale Drehachse in bezug auf das Luftfahrzeug nach hinten durch einen Anschlag gesichert ist.

Ein Verfahren gemäss Oberbegriff des Patentanspruchs 1 und eine Vorrichtung gemäss dem Oberbegriff des Patentanspruchs 5 sind aus der US—A—3 248 074 bekannt. Nach diesem Verfahren wurde der an einem Helikopter hängende Behälter zum Entleeren um annähernd 90° so langsam gedreht, dass die Löschflüssigkeit in Form einer breiten, flachen Flüssigkeitsschicht über einen vorderen, geraden, horizontalen Behälterrandteil aus dem Behälter herabströmte. Die flache Flüssigkeitsschicht hatte eine im Verhältnis zu ihrem Volumen grosse Begrenzungsfläche, an der verhältnismässig viel Wasser in der erheblichen Hitze über der Brandstelle verdampfte und zum Löschvorgang nichts beitrug. Die verhältnismässig grosse Begrenzungsfläche bildete eine entsprechend grosse Angriffsfläche für die starke Luftströmung, die infolge der Hitze des Feuers über der Brandstelle entsteht, wodurch die Flüssigkeitsschicht leicht "zerrissen" und weggetragen werden konnte. Beim Entleeren des Behälters schwebte der Helikopter über der Brandstelle. Der Behälter wurde, offenbar um die Löschflüssigkeitsschicht der Hitze und der Luftströmung möglichst wenig auszusetzen, aus verhältnismässig geringer Flughöhe, z.B. 7,6 m entleert. Dabei war aber der Rotorwind des Helikopters so stark, dass das Feuer erheblich angefacht und damit der Löschvorgang teilweise wieder zunichte gemacht wurde. Zum Entleeren des Behälters bei schwebendem Helikopter musste die Fluggeschwindigkeit vor der Brandstelle verzögert und danach wieder beschleunigt werden. Dadurch und wegen des langsamen Entleerens des Behälters war die Zeit, die der Helikopter von der Stelle, an welcher der Behälter mit Löschflüssigkeit gefüllt wurde, bis zur Brandstelle und zurück erheblich länger als die der Entfernung angemessene Flugzeit. Bei der bekannten Vorrichtung lag die Drehachse des Behälters oberhalb des Schwerpunktes sowohl des leeren als auch des mit Löschflüssigkeit gefüllten Behälters. Am Behälter war ein Arm befestigt, an dessen freiem Ende ein unten aus dem Luftfahrzeug herausgeführtes Zugseil befestigt war, an dem zum Drehen des Behälters gezogen wurde. Der Behälter hatte die für das Verfahren, zu dessen Durchführung er bestimmt war, erforderlichen Eigenschaften. Er war nach vorn nur um ungefähr 90° drehbar, und konnte, wie für dieses Verfahren ausreichend, in gefülltem Zustand nur verhältnismässig langsam gedreht werden, weil dazu das Zugseil um eine erhebliche Strekke mit nennenswerter Kraft gezogen werden musste, um das Drehmoment zu überwinden, das bestrebt war, den im stabilen Gleichgewicht befindlichen, mit Löschflüssigkeit, in der Regel Wasser, gefüllten Behälter in seine Ruhelage zurückzudrehen. Ausserdem hatte der Behälter einen rechteckigen Grundriss und einen in Bezug auf den Helikopter vorn, parallel zur Drehachse verlaufenden, horizontalen, geraden Randteil, von dem die Löschflüssigkeit beim langsamen Entleeren des Behälters in Form der breiten, flachen Flüssigkeitsschicht herabströmte. Dabei wurde, wie oben erwähnt, nur ein Teil der Löschflüssigkeit wirksam, der zwar grösser war, wenn der Behälter in verhältnismässig geringer Höhe über der Brandstelle entleert wurde, wobei aber der Rotorwind des Helikopters das Feuer unvermeidlich anfachte; und die Fluggeschwindigkeit musste vor dem Entleeren des Behälters bis zum Schwebezustand verzögert und entsprechend wieder beschleunigt werden, wodurch der Vorteil eines schnellen Löschflüssigkeitstransports auf dem Luftwege nur beschränkt ausgenutzt werden konnte. Zum Füllen wurde der Behälter in ein offenes Gewässer getaucht und wieder herausgezogen, wobei die Fluggeschwindigkeit offenbar ebenfalls bis etwa zum Stillstand verzögert und danach wieder beschleunigt werden musste.

Hier will die Erfindung Abhilfe schaffen. Die Erfindung, wie sie in den Ansprüchen gekennzeichnet ist, löst die Aufgabe, ein Brandlöschverfahren und eine Vorrichtung zu dessen Ausführung zu schaffen, die es ermöglichen, die für die einzelnen Löschflüge erforderliche Zeit zu verkürzen und dabei jeweils einen grösseren Teil der transportierten Löschflüssigkeit gezielt an der Brandstelle zur Wirkung zu bringen.

Die durch die Erfindung erreichten Vorteile sind im wesentlichen darin zu sehen, dass die Oberfläche der als ein Ganzes herabfallenden Wassermasse bei gegebenem Volumen sehr viel kleiner als die einer flachen Flüssigkeitsschicht ist, so dass sehr viel weniger Löschflüssigkeit in der Hitze über der Brandstelle verdampft, und dass diese Wassermasse der Luftströmung über der Brandstelle eine viel kleinere Angriffsfläche pro Masseneinheit bietet, so dass sie praktisch nicht zerrissen und weggetragen wird. Deshalb kann der Behälter in einer grösseren Höhe über der Brandstelle entleert werden, wobei der Rotorwind das Feuer nicht mehr anfacht. Die als ein Ganzes herabfallende Wassermasse kann auch bei erheblicher Fluggeschwindigkeit als ein Ganzes, ähnlich einer Fliegerbombe, gezielt abgeworfen werden, ohne dasse die Fluggeschwindigkeit nennenswert verzögert und wieder beschleunigt werden müsste, so dass der Vorteil des schnellen Löschmitteltransports auf dem Luftwege voll ausgenutzt werden kann, Wenn ein offenes Gewässer genügender Länge zur Verfügung steht, kann das Verfahren nach dem Patentanspruch 4 angewandt werden, bei dem auch zum Füllen des Behälters mit Löschwasser die Fluggeschwindigkeit nicht oder nur viel weniger verzögert und wieder beschleunigt zu werden braucht.

Im folgenden wird die Erfindung anhand von lediglich einen Ausführungsweg darstellenden Zeichnungen näher erläutert. Es zeigen:

Fig. 1 eine Vorderansicht der Vorrichtung in Blickrichtung des Pfeiles I in Fig. 2,

Fig. 2 eine teilweise Seitenansicht in Richtung des Pfeiles II in Fig. 1,

Fig. 3 eine Einzelheit von Fig. 2 in grösserem Massstab,

Fig. 4 eine Einzelheit von Fig. 1 in noch grösserem Massstab und

Fig. 5 einem Schnitt nach der Linie V—V in Fig. 4.

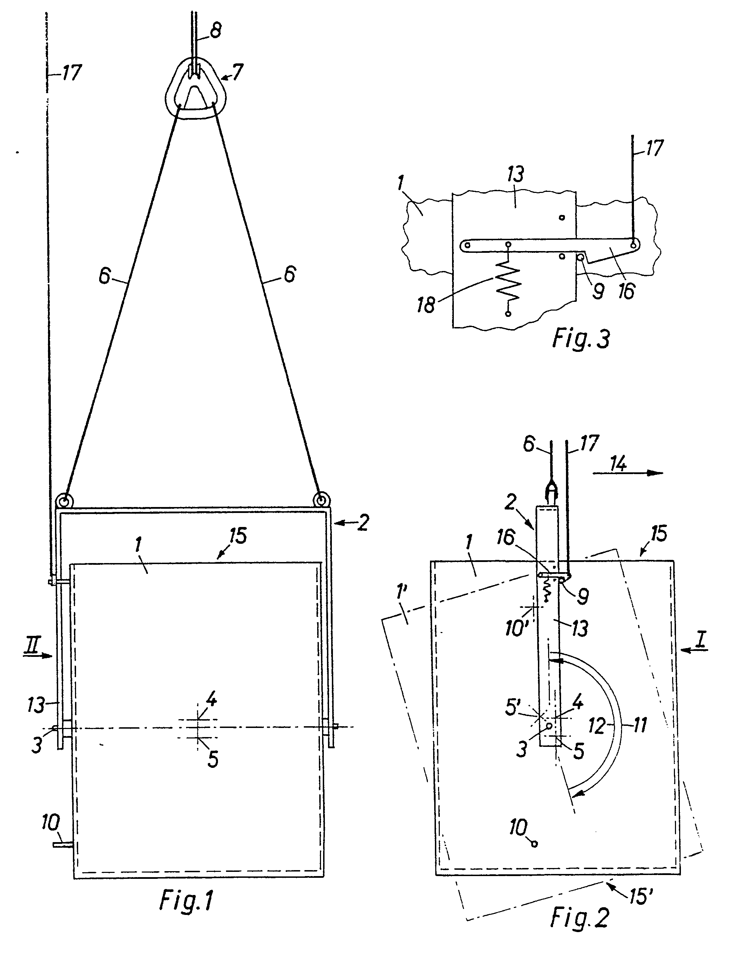

Ein oben offener, zylindrischer Behälter 1 für Löschwasser ist an den Schenkelenden eines U-förmigen Bügels 2 um eine Achse 3 drehbar gelagert. In der ausgezogen dargestellten Behälterruhelage liegt die Achse 3 tiefer als der Schwerpunkt 4 des mit Wasser gefüllten Behälters 1 und höher als der Schwerpunkt 5 des leeren Behälters 1. Der Bügel 2 hängt an zwei Tragseilen 6, die unten mit den Enden des die Bügelschenkel verbindenden Bügelteiles und oben in einem Abstand voneinander an einem Verbindungselement 7 befestigt sind, das auf der (nur teilweise dargestellten) Lastklinkenkabelschleife 8 eines (nicht dargestellten) Drehflügelflugzeuges abgestützt ist. Die Klinkenkabelschleife 8 ist einerseits fest und andererseits in einem Abstand davon durch die Lastklinke lösbar mit dem Flugzeug verbunden. Der Abstand liegt in der Geradeausflugrichtung (14 in Fig. 2).

Die Drehung des Behälters 1 ist mittels zweier an ihm befestigter Stifte 9 und 10 auf einen Bereich (11 bzw. 12) begrenzt, der grösser als 90° und kleiner als 180° ist. In der ausgezogen dargestellten Stellung des Behälters 1 stösst der Stift 9 an die in Fig. 2 rechte, d.i. die in Geradeausflugrichtung 14 vordere Seite des Bügelschenkels 13. Nach der maximalen Drehung 11 im Uhrzeigersinn ist der Behälter 1 in der strichpunktiert dargestellten Lage 1', wobei der Stift 10 in seiner Lage 10' an die in Fig. 2 linke Seite des Bügelschenkels 13 anstösst. Bei dieser Drehung 11 bewegt sich die Behälteröffnung 15 in Geradeausflugrichtung 14 nach vorn abwärts, d.h. in Richtung des Pfeiles 11 in die Lage 15'.

Am Bügelschenkel 13 ist eine Klinke 16 angebracht, die den Stift 9 am Bügelschenkel 13 hält, wenn der Behälter 1 in der ausgezogenen Stellung (Oeffnung 15 oben) ist. Die Klinke 16 kann mittels eines Zugseiles 17 vom Drehflügelflugzeug aus gegen die Kraft einer Feder 18 ausgeklinkt werden, um den Stift 9 freizugeben. Danach schwenkt der Behälter 1, wenn er gefüllt ist, wobei sein Schwerpunkt 4 höher als die Achse 3 liegt, in Pfeilrichtung 11, und entleert sich dabei nach vorn (14) abwärts. Danach liegt der Schwerpunkt 5' des leeren Behälters (in dessen Stellung 1') höher und bezogen auf die Geradeausflugrichtung 14 hinter der Achse 3, so dass der Behälter in Pfeilrichtung 12 aus der strichpunktierten (1') in die ausgezogen dargestellte Lage 1 zurückkehrt, in welcher die Klinke 16 unter der Wirkung der Feder 18 wieder einklinkt und in der eingelinkten Stellung gehalten bleibt.

Die Achse 3 ist, wie Fig. 2 zeigt, so angeordnet, dass sie in (vertikaler) Behälterruhestellung 1 in Geradeausflugrichtung 14 hinter dem Schwerpunkt 4 des gefüllten Behälters liegt. Dadurch wird erreicht, dass der gefüllte Behälter sich beim Ausklinken der Klinke 16 unverzüglich entleert. Das ist wichtig, denn der Pilot kann während des Fluges (mit z.B. 60 km/Std. Fluggeschwindigkeit) nur dann erfolgreich gezielt löschen, wenn er das Entleeren des Behälters in einem ganz bestimmten Zeitpunkt auslösen kann.

Das gelingt in der Praxis auch dann, aber nicht mit derselben Sicherheit, wenn die Achse in vertikaler Behälterruhestellung (abweichend von Fig. 2) vertikal unter dem Schwerpunkt des gefüllten Behälters liegt. Denn dann liegt der Schwerpunkt des gefüllten Behälters während des Fluges in Flugrichtung auch etwas weiter vorn als die Achse, weil der Behälter mit den Tragseilen wegen seines Luftwiderstandes nicht vertikal hängt, sondern etwas nach hinten geschwenkt ist.

In der Behälterstellung 1' liegt der Schwerpunkt 5' des leeren Behälters sowohl dann, wenn er in vertikaler Behälterruhelage 1 vertikal unter der Achse 3 liegt als auch dann, wenn er dabei in Flugrichtung 14 nach vorn versetzt ist, in Flugrichtung 14 hinter der Achse 3, weil die Drehung 11 grösser als 90° und kleiner als 180° ist. Dadurch ist die Zurückdrehung 12 des Behälters 1' in seine Ruhelage 1 gewährleistet.

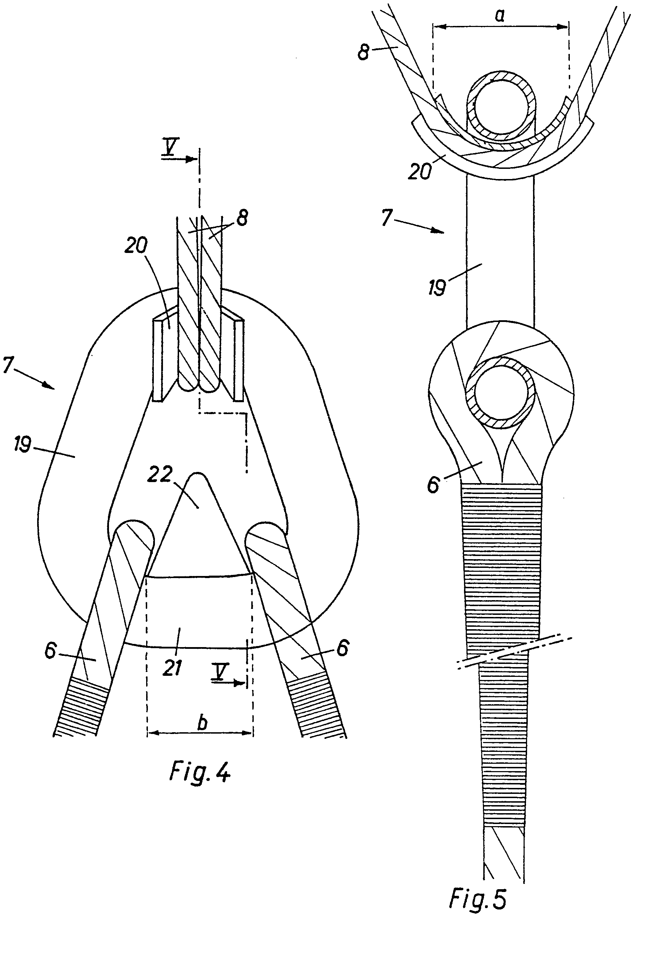

Das Verbindungselement 7 besteht aus einem gleichschenkligdreieckigen Stahlrohrrahmen 19 (Fig. 4 und 5), in dessen oberer, innerer Ecke eine auf dem Klinkenkabel 8 aufliegende Auflage 20 befestigt ist. Die Auflage 20 ist kreisbogenförmig und hat ein der Klinkenkabelschleife 8 angepasstes Seilrillenprofil. Die Enden der Auflage 20 liegen in einem Abstand a voneinander symmetrisch beiderseits der Rahmenfläche. Die oberen Enden der Tragseile 6 sind an den unteren Ecken des Rahmens 19 befestigt. Ein am Basisteil 21 des Rahmens 19 nach oben in den Rahmen hineinragender Vorsprung 22 hält die oberen Enden der Tragseile 6 zuverlässig in einem Abstand b voneinander.

Die Abstände a und b sind so bemessen, dass der Bügel 2 mit dem Behälter 1 in bezug auf Drehungsbewegungen un eine vertikale Achse in einer stabilen Lage am Flugzeug hängt, d.h. sich während des Fluges nicht nennenswert um eine vertikale Achse drehen kann und nach einer solchen Drehung unverzüglich in seine diesbezügliche Ausgangslage von selbst zurückkehrt.

Da die zwischen dem Flugzeug und dem Verbindungselement 7 verlaufenden Teile der Klinkenkabelschleife 8 am Flugzeug einen in Geradeausflugrichtung 14 liegenden. Abstand und am Verbindungselement 7 den Abstand a voneinander haben, die Tragseile 6 am Verbindungselement 7 im Abstand b voneinander und unten an den Enden des die Bügelschenkel miteinander verbindenden Teils des Bügels 2, also ebenfalls in einem Abstand voneinander befestigt sind und die Abstände a und b durch das Verbindungselement 7 rechtwinklig zueinander fixiert sind, verläuft die Achse 3 rechtwinklig zur Geradeausflugrichtung 14. Da die Abstände a und b wie oben angegeben bemessen sind, ist die Achse 3 in dieser Lage stabil, d.h. sie kehrt nach einer Auslenkung (Drehung um eine vertikale Achse) stets von selbst in diese Lage zurück. Da ausserdem der Stift 9 wie oben erwähnt (in der dargestellten Stellung des Behälters 1), in Geradeausflugrichtung 14 vor dem Bübel 2 liegt, kann der Behälter 1, wenn die Klinke 16 ausgeklinkt wird, nur in Geradeausflugrichtung 14 nach vorn abwärts kippen (Pfeil 11). Beim Ausklinken entleert sich der Behälter 1 somit zwangsläufig in Geradeausflugrichtung 14 nach vorn (11). Dies ermöglicht das gezielte Löschen während des Fluges.

Der am Luftfahrzeug hängende Behälter 1 kann aus einem offenen Gewässer sehr schnell gefüllt werden, indem er vom Luftfahrzeug bei eingeklinkter Klinke 16 mit seiner Oeffnung 15 voran an der Oberfläche des Gewässers geschleppt wird, so dass er untergeht und sich mit Wasser füllt, durch Vergrösserung der Flughöhe aus dem Wasser gehoben und dann zur Brandstelle geflogen wird.

## Patentansprüche

1. Verfahren zum Löschen von Bränden, bei dem ein an einem Luftfahrzeug hängender, oben offener, mit Löschflüssigkeit, insbesondere Löschwasser, gefüllter Behälter in bezug auf das Luftfahrzeug nach vorn gedreht und dadurch entleert wird, dadurch gekennzeichnet, dass der Behälter bei geradeaus fliegendem Luftfahrzeug plötzlich um nahezu 180° nach vorn abwärts gedreht wird, um die Löschflüssigkeit als ein Ganzes gezielt auf die zu löschende Stelle zu werfen.

2. Verfahren nach Anspruch 1, dadurch gekennzeichnet, dass der Behälter im labilen Gleichgewicht gehalten und zum plötzlichen Drehen losgelassen wird.

3. Verfahren nach Anspruch 1, dadurch gekennzeichnet, dass der Behälter plötzlich um nahezu 180° gedreht wird, während das Luftfahrzeug schräg abwärts fliegt.

4. Verfahren nach einem der Ansprüche 1 bis 3, dadurch gekennzeichnet, dass der am Luftfahrzeug in seiner Ruhelage hängende Behälter zum Füllen aus einem offenen Gewässer mit seiner Oeffnung voran an der Wasseroberfläche so geschleppt wird, dass er untergeht, und dass er dann aus dem Gewässer herausgezogen und über die Brandstelle geflogen wird.

5. Vorrichtung zur Ausführung der Verfahrens nach einem der Ansprüche 1 bis 4, mit einem unten an einem Luftfahrzeug angehängten, oben offenen Löschflüssigkeitsbehälter (1), der zum Entleeren mit der Oeffnung in bezug auf das Luftfahrzeug nach vorn um eine horizontale Achse (3) drehbar ist, wobei die Drehachse (3) rechtwinklig zur Längsrichtung des Luftfahrzeugs gehalten und der Behälter (1) in seiner Ruhelage gegen eine Drehung um die horizontale Drehachse (3) in bezug auf das Luftfahrzeug nach hinten durch einen Anschlag (9/13) gesichert ist, dadurch gekennzeichnet, dass der Behälter in bezug auf das Luftfahrzeug um nahezu 180° nach vorn abwärts (11) drehbar ist, und dass in der Ruhestellung des gefüllten Behälters (1) der Schwerpunkt (4) des Behälters höher als die horizontale Drehachse (3) und vertikal über oder in bezug auf die Geradeaus-Flugrichtung (14) des Luftfahrzeugs vor der Drehachse (3) liegt, und dass der Behälter in seiner Ruhelage gegen eine Drehung (11) in bezug auf das Luftfahrzeug nach vorn durch eine vom Luftfahrzeug auslösbare Klinke (16) gesichert ist.

6. Vorrichtung nach Anspruch 5, dadurch gekennzeichnet, dass in der Stellung (1'), in welcher der Behälter mit seiner Oeffnung (15') nach vorn abwärts gedreht ist, der in dieser Stellung höher als in Behälterruhelage (1) liegende Schwerpunkt (5') des leeren Behälters (1') in Geradeausflugrichtung (14) hinter der Achse (3) liegt.

7. Vorrichtung nach Anspruch 5 oder 6, bei welcher der Behälter an den freien Schenkelenden eines U-förmigen Bügels um die Achse drehbar gelagert ist, dadurch gekennzeichnet, dass der Behälter an zwei Tragseilen (6) am Luftfahrzeug hängt, dass die Tragseile (6) in einem solchen horizontalen Abstand voneinander gehalten sind, dass sie einander in Flugbetrieb nicht berühren, so dass der Bügel (2) in bezug auf Drehbewegungen um eine vertikale Achse stabil hängt.

8. Vorrichtung nach Anspruch 7, zum Aufhängen an einem Drehflügelflugzeug, das eine Lastklinkenkabelschleife hat, die einerseits in einer Lastklinke des Flugzeugs lösbar gehalten ist und andererseits in einem in Geradeausflugrichtung liegenden Abstand davon am Flugzeug befestigt ist, gekennzeichnet durch ein Verbindungselement (7), das oben eine auf der Klinkenkabelschleife (8) abzustützende Auflage (20) hat, deren Enden einen horizontalen Abstand (a) voneinander haben, der eine gegenseitige Berührung der beiden je zwischen einem Ende der Auflage (20) und dem Drehflügelflugzeug verlaufenden Teile der Klinkenkabelschleife (8) verhindert, und unterhalb der Auflage (20) fest mit dieser verbundene Befestigungsstellen für die oberen Enden der Tragseile (6) sowie ein Organ (22) hat, das einen eine gegenseitige Berührung der Tragseile (6) verhindernden Abstand (b) der oberen Tragseilenden sicherstellt.

9. Vorrichtung nach Anspruch 8, dadurch gekennzeichnet, dass die Auflage (20) ein Rillenprofil hat, in der oberen, inneren Ecke eines gleichschenklig-dreieckigen Rahmens (19) angeordnet ist und beiderseits über die Rahmenfläche vorsteht, dass die Basisecken des Rahmens (19) die Befestigungsstellen für die oberen Enden der Tragseile (6) bilden, und dass die Innenseite des Basisteils (21) des Rahmens (19) mit einem das Organ bildenden, in den Rahmen hineinragenden Vorsprung (22) versehen ist, der sich bis an die Befestigungsstellen für die oberen Tragseilenden erstreckt, um den gegenseitigen Abstand (b) der zur Befestigung je durch eine der inneren Basisecken des Rahmens (19) hindurchgeführten Enden der Tragseile (6) sicherzustellen.

## Revendications

1. Procédé pour éteindre des feux, selon lequel un réservoir rempli d'un fluide extincteur, en particulier d'eau, ouvert par-dessus et suspendu à un engin volant, est pivoté vers l'avant par rapport à l'engin et est ainsi vidé, caractérisé en ce que dans l'engin volant en ligne droite le réservoir est pivoté brusquement vers l'avant et vers le bas d'environ 180° pour projeter le fluide extincteur comme un tout en direction de l'emplacement à éteindre.

2. Procédé selon la revendication 1, caractérisé en ce que le réservoir est maintenu en équilibre instable et en ce qu'il est lâché pour son pivotement brusque.

3. Procédé selon la revendication 1, caractérisé en ce que le réservoir est pivoté brusquement d'environ 180° tandis que l'engin vole obliquement vers le bas.

4. Procédé selon l'une quelconque des revendications 1 à 3, caractérisé en ce que le réservoir suspendu à l'engin volant dans sa position de repos est traîné, pour son remplissage à partir d'une eau libre, avec son ouverture tournée vers l'avant à la surface libre de l'eau de manière telle qu'il soit submergé, et en ce qu'il est ensuite tiré hors de l'eau et amené au-dessus de l'emplacement du feu.

5. Dispositif pour la mise en oeuvre du procédé selon l'une quelconque des revendications 1 à 4, comprenant un réservoir (1) de fluide extincteur ouvert par-dessus et suspendu à un engin volant, réservoir qui, pour être vidé par l'ouverture peut pivoter vers l'avant par rapport à l'engin volant autour d'un axe horizontal (3), l'axe de rotation (3) étant perpendiculaire à la direction longitudinale de l'engin volant et le réservoir (1) étant, dans sa position de repos, prémuni par une butée (9/13) contre un pivotement vers l'arrière autour de l'axe horizontal (3) par rapport à l'engin volant, caractérisé en ce que le réservoir peut pivoter d'environ 180° vers l'avant et vers le bas par rapport à l'engin volant; en ce qu'en postion de repos du réservoir (1) rempli, le centre de gravité (4) dudit réservoir est situé plus haut que l'axe horizontal de pivotement (3) et à la verticale au-dessus de ou bien, par rapport à la direction de vol en ligne droite de l'engin volant, en avant de l'axe de pivotement (3); et en ce que le réservoir, dans sa position de repos, est prémuni contre un pivotement (11) par rapport à l'engin volant grâce à un cliquet (16) déclenchable depuis l'engin volant.

6. Dispositif selon la revendication 5, caractérisé en ce que, dans la position (1') dans laquelle le réservoir est pivoté avec son ouverture (15') vers l'avant et vers le bas, le centre de gravité (5') du réservoir vide (1') qui dans cette position se trouve plus haut que dans la position de repos (1) du réservoir est situé en arrière de l'axe (3) selon la direction de vol en ligne droite (14).

7. Dispositif selon la revendication 5 ou 6, dans lequel le réservoir est monté mobile en rotation autour de l'axe sur les extrémités libres des branches d'un étrier en forme de U, caractérisé en ce que le réservoir est suspendu à l'engin volant à l'aide de deux câbles porteurs (6), en ce que les câbles porteurs (6) sont maintenus à une distance horizontale l'un de l'autre telle qu'en vol ils ne se touchent pas mutuellement de sorte que l'étrier (2), pour ce qui est des mouvements de rotation, est suspendu de façon stable autour d'un axe vertical.

8. Dispositif selon la revendication 7 pour la suspension à un engin volant à voilure tournante qui possède une boucle de câble pour un cliquet de charge qui, d'un côté, est tenue de façon amovible dans un cliquet de l'engin volant et, de l'autre côté, est fixée à l'engin volant à distance dudit cliquet selon la direction de vol en ligne droite, caractérisé par un élément d'accouplement (7) qui possède en haut un revêtement (20), devant soutenir la boucle (8) du câble à cliquet, dont les extrémités possèdent un écartement horizontal mutuel (a) qui empêche un contact mutuel des deux parties de la boucle (8) du câble s'étendant chacune entre une extrémité du revêtement (20) et l'engin volant à voilure tournante, et qui au-dessous du revêtement (20), solidaire de celui-ci, possède des emplacements de fixation pour les extrémités supérieures des câbles porteurs (6) ainsi qu'un organe (22) qui assure un écartement (b) des extrémités supérieures des câbles porteurs empêchant un contact mutuel des câbles porteurs (6).

9. Dispositif selon la revendication 8, caractérisé en ce que le revêtement (20) possède un profil en gorge, est disposé dans l'angle supérieur intérieur d'un cadre (19) triangulaire isocèle et se prolonge des deux côtés au-delà de la surface du cadre, en ce que les angles de base du cadre (19) constituent les emplacements de fixation des extrémités supérieures des câbles porteurs (6), et en ce que le côté interne de la partie de base (21) du cadre (19) est muni d'une saillie (22) dirigée vers l'intérieur du cadre et constituant l'organe, saillie qui s'étend jusqu'aux emplacements de fixation des extrémités supérieures des câbles porteurs pour assurer l'écartement mutuel (b) des extrémités des câbles porteurs (6) introduites en vue de leur fixation chacune dans un des angles de base intérieurs du cadre (19).

## Claims

1. A method of extinguishing fires in which an upwardly-open container, hanging from an aircraft and filled with extinguishing liquid, more especially extinguishing water, is rotated forwardly with regard to the aircraft and thereby emptied, characterised in that the container, with the aircraft flying straight ahead, is suddenly rotated forwardly and downwardly through almost 180° in order to throw the extinguishing liquid as a whole in a targeted manner onto the location that is to be extinguished.

2. A method as claimed in claim 1, characterised in that the container is held in unstable equilibrium and released for sudden rotation.

3. A method as claimed in claim 1, characterised in that the container is rotated suddenly through almost 180° whilst the aircraft is flying obliquely downwards.

4. A method as claimed in claim 1 to 3, characterised in that the container hanging in its rest position from the aircraft, for filling from an open stretch of water, is so towed with its opening foremost on the surface of the water that it sinks, and in that it is then withdrawn from the stretch of water and flown over the scene of the fire.

5. A device for carrying out the method as claimed in one of claims 1 to 4, comprising an upwardly-open extinguishing-liquid container (1) which is suspended from the bottom of an aircraft and which, for emptying, is forwardly rotatable with its opening, with regard to the aircraft, about a horizontal axis, in which respect the axis of rotation (3) is kept at right angles to the longitudinal direction of the aircraft and the container (1), in its rest position, is secured against rearward rotation, with regard to the aircraft, about the horizontal axis of rotation (3) by a stop (9/13), characterised in that the container is rotatable, with regard to the aircraft, through almost 180° forwardly and downwardly (11), and in that in the rest position of the filled container (1) the centre of gravity (4) of the container lies higher than the horizontal axis of rotation (3) and vertically above or, with regard to the straight flight direction (14) of the aircraft, in front of the axis of rotation (3), and in that the container in its rest position is secured against forward rotation (11), with regard to the aircraft, by a pawl (16) which is releasable from the aircraft.

6. A device as claimed in claim 5, characterised in that, in the position (1') in which the container is rotated with its opening (15') forwardly and downwardly, the centre of gravity (5'), of the empty container (1'), lying in a position higher than in the container's rest position (1), lies, in the straight flight direction (14), behind the axis (3).

7. A device as claimed in claim 5 or 6, in which the container is mounted, for rotation about the axis, at free limb ends of a U-shaped stirrup, characterised in that the container is suspended from two supporting ropes (6) on the aircraft, and in that the supporting ropes (6) are held at such a horizontal spacing from one another that they do not touch another in flight operation, so that the stirrup (2) hangs stably with regard to rotary motions about a vertical axis.

8. A device as claimed in claim 7, for suspension from a rotary-wing aircraft which has a load pawl cable loop which on the one hand is held releasably by a load pawl of the aircraft and on the other hand is fastened at a spacing therefrom, laying in the straight flight direction, to the aircraft, characterised by a connection element (7) which has, at its top, a support (20) which is to be supported on the pawl cable loop (8) and the ends of which have a horizontal spacing (*a*) from one another which prevents mutual contact of the two parts of the panel cable loop (8), each extending between one end of the support (20) and the rotary-wing aircraft, and has, underneath the support (20), attachment points connected securely to this for upper ends of the supporting ropes (6), as well as a member (22) which ensures a spacing (*b*) of the upper ends of the supporting ropes which prevents mutual contact of the supporting ropes (6).

9. A device as claimed in claim 8, characterised in that the support (20) has a groove profile, is arranged in the upper, inner corner of an isosceles-triangular frame (19) and protrudes on both sides beyond the frame surface, in that the base corners of the frame (19) form the attachment points for the upper ends of the supporting ropes (6), and in that the inside of base part (21) of the frame (19) is provided with a projection (22) which forms the member, which extends into the frame and which extends as far as the attachment points for the upper supporting rope ends, in order to ensure the mutual spacing (*b*) of the ends of the supporting ropes (6), conducted for attachment each through one of the inner base corners of the frame (19).

Fig. 3

Fig.1

Fig.2

Fig. 4

Fig. 5